# DEMANDE DE BREVET EUROPEEN

(11) **EP 0 989 050 A1**
(43) Date de publication de la demande: **29.03.2000**
(21) Numéro de dépôt: 99402288.7
(22) Date de dépôt: 20.09.1999
(51) Int. Cl.: B62D 15/02, G01D 5/347

(54) **Système à capteur d'angle, notamment pour colonne de direction de véhicule automobile**

(30) Priorité: 22.09.1998 FR 9811800
(71) Demandeur: SC2N, 78180 Montigny-le-Bretonneux (FR)
(72) Inventeur: Hallet, Michel, 14320 Clinchamps/Orne (FR)
(74) Mandataire: Texier, Christian

(57) **Abrégé**

La présente invention concerne un Système à capteur d'angle, notamment pour colonne de direction de véhicule automobile, comprenant un élément d'entraînement (10), un élément mobile (30) de capteur d'angle, et des moyens (20) assurant une liaison d'entraînement à rotation entre l'élément d'entraînement (10) et l'élément mobile (30) de capteur d'angle, caractérisé par le fait que les moyens de liaison comprennent une pièce intermédiaire (20) intercalée entre l'élément d'entraînement (10) et l'élément mobile (30) de capteur, laquelle pièce intermédiaire (20) comporte des moyens (24, 26) aptes à assurer une liaison à rotation entre la pièce intermédiaire (20) et chacun de l'élément d'entraînement (10) et de l'élément mobile (30), tout en autorisant un débattement radial entre ladite pièce intermédiaire (20) et chacun de l'élément d'entraînement (10) et de l'élément mobile (30).

## Description

La présente invention concerne le domaine des capteurs d'angle.

La présente invention s'applique notamment, mais non exclusivement, au domaine des systèmes installés sur une colonne de direction de véhicule automobile.

De nombreux capteurs d'angle ont déjà été proposés à cet effet.

De tels capteurs d'angle peuvent être utilisés par exemple pour piloter des systèmes de contrôle de trajectoire, de contrôle d'assiette, d'assistance à la direction etc...

Cependant aucun des capteurs d'angle connus ne donne pleinement satisfaction. Les inconvénients constatés sur les capteurs connus résultent fréquemment d'un défaut de coaxialité entre l'élément transducteur mobile du capteur (roue codeuse généralement) et l'élément d'entraînement associé. Un tel défaut de coaxilialité peut être dû à l'empilage des tolérances, à des défauts de position, des défauts de forme des pièces, etc...

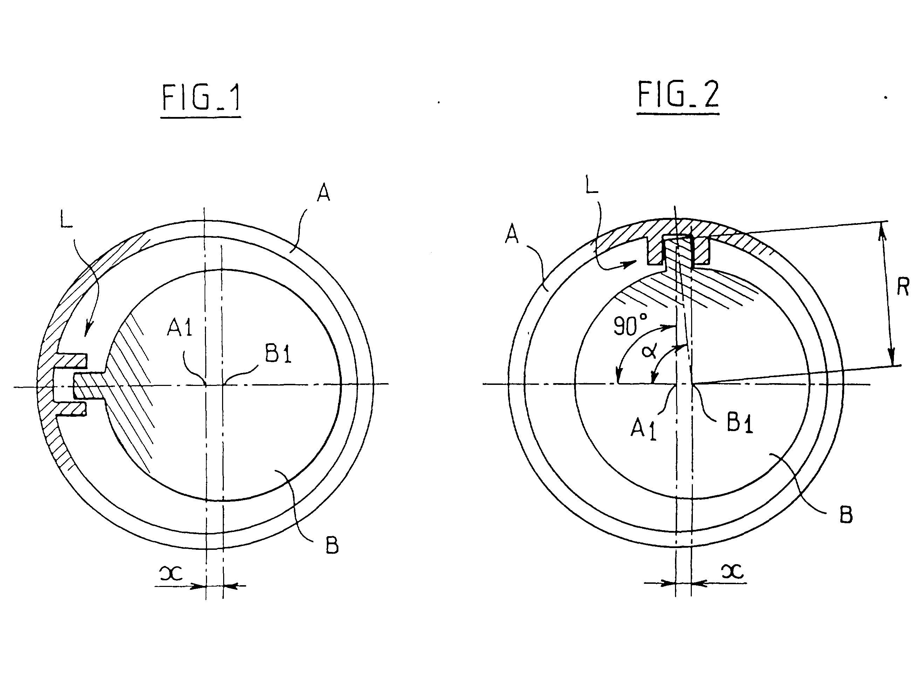

On a ainsi schématisé sur les figures 1 et 2, un système à capteur d'angle connu comprenant une roue codeuse A de capteur, centré sur un axe A1, entraîné par un élément B, tel qu'un arbre de colonne de direction, centré sur un axe B1, lequel est décalé de l'axe A1 d'une amplitude x. Sur les figures 1 et 2, les moyens assurant la liaison d'entraînement directe ou indirecte, entre les éléments A et B, sont référencés L. L'homme de l'art comprendra à l'examen comparé des figures 1 et 2, que lorsque l'élément A est entraîné à rotation sur 90°, l'élément B est entraîné à rotation sur un angle différent égal à α, avec α = (90° -/+ β) et sin β = (x/R), R représentant le rayon d'entraînement défini entre les éléments A et B. Ainsi l'homme de l'art comprendra que les capteurs d'angle connus induisent un décalage angulaire entre l'élément d'entraînement B et la roue codeuse A. Un tel décalage angulaire peut avoir des effets particulièrement néfastes sur les fonctions précitées (contrôle de trajectoire, contrôle d'assiette, assistance à la direction).

La présente invention a maintenant pour but de proposer un nouveau système permettant de remédier aux inconvénients des capteurs connus.

Ce but est atteint dans le cadre de la présente invention grâce à un système comprenant un élément d'entraînement, tel qu'un arbre de direction, un élément mobile de capteur d'angle, tel qu'une roue codeuse, et des moyens assurant une liaison d'entraînement à rotation entre l'élément d'entraînement et l'élément mobile de capteur d'angle, caractérisé par le fait que les moyens de liaison comprennent une pièce intermédiaire intercalée entre l'élément d'entraînement et l'élément mobile de capteur, laquelle pièce intermédiaire comporte des moyens aptes à assurer une liaison à rotation entre la pièce intermédiaire et chacun de l'élément d'entraînement et de l'élément mobile, tout en autorisant un débattement radial entre ladite pièce intermédiaire et chacun de l'élément d'entraînement et de l'élément mobile.

D'autres caractéristiques, buts et avantages de la présente invention apparaîtront à la lecture de la description détaillée qui va suivre et en regard des dessins annexés, donnés à titre d'exemple non limitatif, et sur lesquels :
- les figures 1 et 2 précédemment décrites illustrent schématiquement un système conforme à l'état de la technique,
- la figure 3 représente une vue schématique en coupe verticale d'un haut de colonne de véhicule automobile, susceptible de recevoir un système conforme à la présente invention,
- la figure 4 représente une vue schématique d'un système conforme à la présente invention, selon une vue en coupe transversale,
- la figure 5 représente une vue schématique du même système selon la même vue en coupe transversale dans une deuxième position relative entre l'élément d'entraînement et l'élément mobile de capteur, plus précisément cette figure 5 correspond à la position obtenue après pivotement de 90° de l'élément d'entraînement et de l'élément mobile par rapport à la figure 4, et
- la figure 6 représente une vue schématique du même système selon la même vue en coupe transversale, selon une position à 45° intermédiaire entre celles représentées sur les figures 4 et 5.

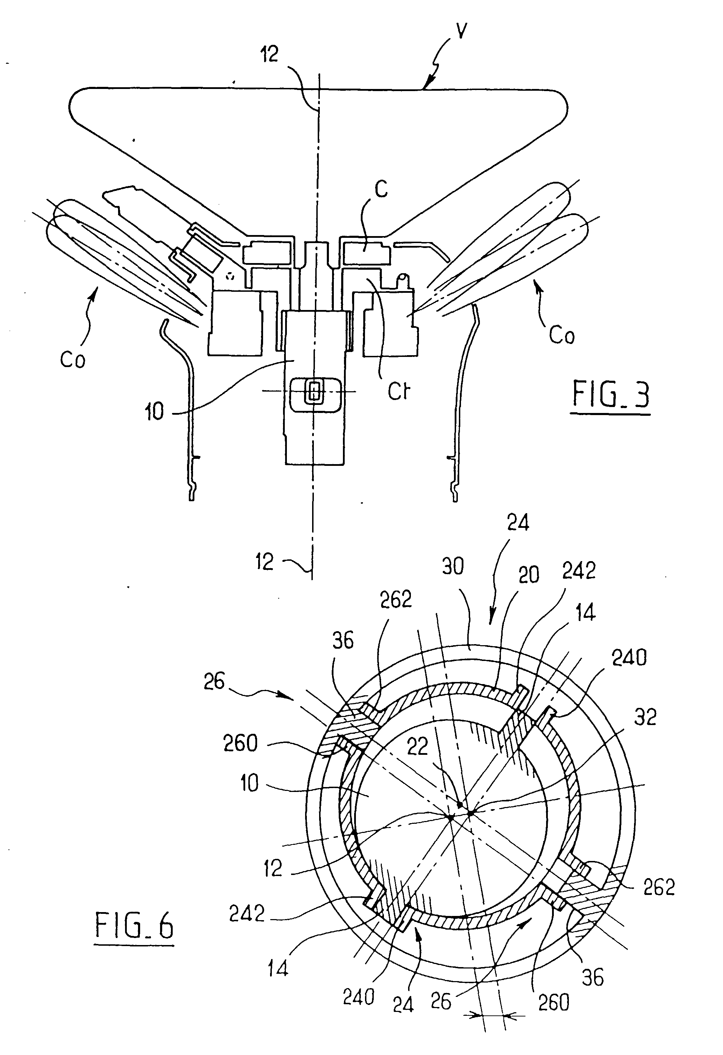

La figure 3 annexée représente schématiquement, en coupe verticale, un haut de colonne de véhicule automobile, susceptible de recevoir un système conforme à la présente invention.

On aperçoit sur cette figure 3, un volant V, un arbre de direction 10, un capteur d'angle C, un ensemble de commutation Co, et un contacteur tournant Ct adapté pour transmettre des signaux électriques entre le volant ou l'arbre de direction 10, mobile à rotation autour de leur axe 12, et la colonne fixe qui entoure cet arbre 10.

Le contacteur électrique tournant Ct peut faire l'objet de nombreux modes de réalisation.

Il peut être formé par exemple de deux éléments susceptibles de rotation relative autour de l'axe 12, liés respectivement au volant V ou à l'arbre 10 d'une part et à la colonne fixe d'autre part, et d'un ruban souple électriquement conducteur, dont les extrémités sont solidaires respectivement de ces deux éléments.

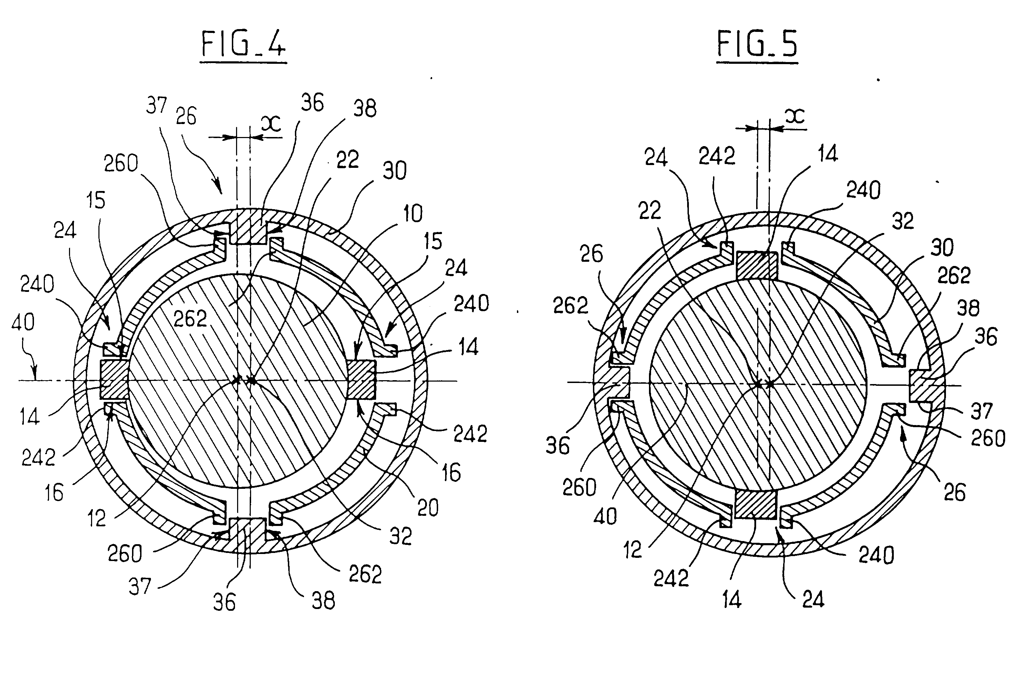

On aperçoit sur les figures 4 à 6 annexées un système conforme à la présente invention comprenant un arbre de direction 10 centré sur un axe 12, un élément mobile de capteur 30 tel qu'une roue codeuse en forme d'anneau, centré sur un axe 32 et disposé autour de l'arbre de direction 10, et une pièce de liaison 20 intercalée entre l'arbre de direction 10 et l'élément mobile annulaire 30.

Les deux axes 12 et 32 sont au moins sensiblement parallèles, mais décalés d'une valeur x dans un plan 40 passant par ces axes 12 et 32.

La pièce de liaison 20 est également en forme générale d'anneau ou de bague selon la représentation donnée sur les figures annexées. Cependant la pièce de liaison 20 n'est pas limitée à cette géométrie annulaire, l'essentiel étant qu'elle respecte les fonctionnalités conformes à l'invention.

Elle comprend d'une part des moyens 24 adaptés pour assurer une liaison d'entraînement à rotation entre l'arbre de direction 10 et la pièce intermédiaire 20 tout en autorisant un débattement radial entre ces derniers (c'est-à-dire selon un plan passant par l'axe 12 de l'arbre 10), et d'autre part des moyens 26 adaptés pour assurer de façon similaire une liaison d'entraînement à rotation entre la pièce intermédiaire 20 et l'élément mobile 30, tout en autorisant un débattement radial entre ceux-ci (c'est-à-dire selon un plan passant par l'axe 32 de l'élément mobile 30).

Selon le mode de réalisation préférentiel illustré sur les figures 4 à 6 annexées, les moyens 24 comprennent deux doigts ou ergots 14 diamétralement opposés par rapport à l'axe 12, solidaires de la surface extérieure de l'arbre 10 et deux fourchettes complémentaires 24 solidaires de la pièce intermédiaire 20.

Les doigts 14 possèdent chacun deux flancs 15, 16 symétriques par rapport à un plan axial passant par l'axe 12 et parallèles à celui-ci. Ainsi les deux flancs 15, 16 d'un doigt ou ergot 14 sont respectivement coplanaires des flancs 15, 16 du deuxième doigt 14.

Les fourchettes 24 comprennent chacune deux flasques 240, 242 symétriques par rapport à un plan axial passant par l'axe central 22 de la pièce intermédiaire 20 et parallèles à celui-ci. Ainsi les deux flasques 240, 242 d'une fourchette 24 sont respectivement coplanaires des flasques 240, 242 de la deuxième fourchette.

Et la distance séparant les flancs 15 et 16 est égale, au jeu près nécessaire pour autoriser un débattement radial (c'est-à-dire comme indiqué précédemment selon un plan passant par l'axe 12), à la distance séparant les flasques 240, 242 (plus précisément la distance séparant les surfaces internes de ceux-ci).

De même, les moyens 26 comprennent deux doigts ou ergots 36 diamétralement opposés par rapport à l'axe 32, solidaires de la surface intérieure de l'élément mobile 30 et deux fourchettes complémentaires 26 solidaires de la pièce intermédiaire 20.

Les doigts 36 possèdent chacun deux flancs 37, 38 symétriques par rapport à un plan axial passant par l'axe 32 et parallèles à celui-ci. Ainsi les deux flancs 37, 38 d'un doigt 36 sont respectivement coplanaires des flancs 37, 38 du deuxième doigt 36.

Les fourchettes 26 comprennent chacune deux flasques 260, 262 symétriques par rapport à un plan axial passant par l'axe central 22 de la pièce intermédiaire 20 et parallèles à celui-ci. Ainsi les deux flasques 260, 262 d'une fourchette 26 sont respectivement coplanaires des flasques 260, 262 de la deuxième fourchette.

Et la distance séparant les flancs 37 et 38 est égale, au jeu près nécessaire pour autoriser un débattement radial (c'est-à-dire comme indiqué précédemment selon un plan passant par l'axe 32), à la distance séparant les flasques 260, 262 (plus précisément encore à la distance séparant les surfaces internes de ces flasques).

En outre comme on le voit sur les figures 4 à 6 annexées, les fourchettes 24, 26 prévues sur la pièce intermédiaire sont de préférence décalées angulairement d'environ 90°, sur la pièce intermédiaire 20.

Le fonctionnement du système conforme à la présente invention apparaîtra clairement à l'homme de l'art lors d'un examen comparé des figures 4 à 6 annexées.

On a illustré une première position relative des éléments 10, 20 et 30 sur la figure 4. Dans cette position l'axe 22 de la pièce intermédiaire 20 est confondu avec l'axe 32 de l'élément mobile 30. Ainsi, le plan de symétrie des ergots 14 et des flasques 240, 242 passe par le plan défini par les axes 12 et 22, 32. Par contre, le plan de symétrie des ergots 36 et des flasques 260 et 262 est orthogonal au plan précité.

Lorsque l'arbre 10 est entraîné à rotation, les ergots 14 sollicitent les flasques 240 ou 242 selon le sens de rotation et de ce fait, les flasques 260, 262 à leur tour sollicitent les ergots 36.

Après rotation de 45° de l'arbre 10 autour de son axe 12 (dans le sens trigonométrique) on obtient la seconde position illustrée sur la figure 6 dans laquelle l'élément mobile a également été entraîné sur 90°.

Dans cette position, l'axe 22 de la pièce intermédiaire 20 est situé à l'intersection des plans de symétrie de l'arbre 10 et de la pièce mobile 30 passant par leurs axes respectifs 12 et 32.

Après rotation de 90° de l'arbre 10 autour de son axe 12 par rapport à la position d'origine illustrée sur la figure 4 ou de 45° par rapport à la seconde position illustrée sur la figure 6, on obtient la seconde position illustrée sur la figure 5 dans laquelle l'élément mobile 30 a également été entraîné sur 90° par rapport à la position d'origine illustrée sur la figure 4 ou de 45° par rapport à la seconde position illustrée sur la figure 6.

Dans cette position, le plan de symétrie des ergots 36 et des flasques 260, 262 associés est confondu avec le plan passant par les axes 12, 22 et 32. Par contre, le plan de symétrie des ergots 14 et des flasques associés 240, 242 est orthogonal au plan précité.

On notera que dans la position illustrée sur la figure 5, l'axe 22 de l'élément intermédiaire 20 est maintenant confondu avec l'axe 12 de l'arbre 10.

Ainsi, au cours de ce pivotement relatif de 90°, l'axe 22 de la pièce intermédiaire 20 s'est déplacé entre les axes 12 et 32. Il en est ainsi pour chaque rotation relative de 90° entre l'arbre 10 et l'élément mobile 30. Ainsi, pour une rotation relative de 360° entre l'arbre 10 et l'élément mobile 30, l'axe 22 parcourt deux allers-retours entre les axes 12 et 32.

L'homme de l'art comprendra que le système conforme à la présente invention permet d'éviter tout problème d'entraînement de l'élément mobile 30 malgré un défaut de coaxialité entre l'arbre 10 et cet élément mobile 30. En effet, grâce à l'orientation radiale par rapport à leur axe de rotation respectif 12 ou 32, des moyens d'entraînement 14, 36 prévus sur l'arbre 10 et sur l'élément mobile 30, quelle que soit la position angulaire relative entre l'arbre 10 et l'élément mobile 30, les surfaces internes des flasques 240, 242, et 260, 262, respectivement, restent parfaitement parallèles aux surfaces externes en regard des doigts 14 et 36 associés. Ainsi, la présente invention permet d'éviter tout décalage angulaire rencontré sur les systèmes classiques et permet de limiter le jeu entre l'arbre 10 et l'élément mobile 30 et par conséquent d'améliorer la précision de la mesure d'angle. Ceci est fondamental notamment lorsque le capteur d'angle est utilisé pour piloter un système de contrôle de trajectoire ou encore un système de contrôle d'assiette ou d'assistance à la direction.

De plus, la présente invention permet d'obtenir ces avantages sans exiger un ajustement précis entre l'arbre 10 et l'élément mobile 30, lequel ajustement pourrait entraîner des contraintes mécaniques et des difficultés de réalisation.

On notera également que la présente invention permet un montage simple et ce à l'aide de pièce sans exigence particulière de tolérance.

Bien entendu la présente invention n'est pas limitée au mode de réalisation particulier qui vient d'être décrit, mais s'étend à toutes variantes conformes à son esprit.

Ainsi par exemple, en variante, on peut envisager d'inverser la disposition des doigts ou ergots et fourchettes, par rapport à la disposition précédemment décrite, par exemple en disposant les fourchettes 24 et 26 respectivement sur l'arbre de direction 10 et sur l'élément mobile 30 et en disposant les doigts ou ergots 14 et 36 sur la pièce intermédiaire 20.

Bien entendu, la longueur des flasques 240, 242 et 260, 262, ainsi que la longueur des doigts ou ergots 14, 36 dans la direction radiale par rapport à leurs axes respectifs, doivent être suffisantes pour maintenir un engagement des doigts 14 dans les fourchettes 24 et des doigts 36 dans les fourchettes 26 malgré le débattement x autorisé entre la pièce intermédiaire 20 et respectivement l'arbre de direction 10 et l'élément mobile 30 selon la rotation du système.

Cela signifie également que le débattement radial autorisé entre la pièce intermédiaire 20 et respectivement chacun de l'arbre de direction 10 et la pièce mobile 30 doit être au moins égal au décalage x entre les axes 12 et 32, soit en d'autres termes que les différences entre le rayon externe de l'arbre 10 et le rayon interne de la pièce intermédiaire 20 d'une part et entre le rayon externe de la pièce intermédiaire 20 et le rayon interne de la pièce mobile 30 d'autre part, sont au moins égales à la valeur x maximale.

Selon une variante, l'élément 10 qualifié « d'arbre de direction » peut être formé d'un élément structurellement indépendant de l'arbre de direction, mais lié à rotation avec celui-ci, par exemple un élément tel qu'un couvercle du contacteur tournant Ct ou encore le moyeu du volant.

On notera que le système conforme à la présente invention peut être installé en un lieu quelconque d'une colonne de direction, haut, bas ou position intermédiaire.

On notera également que le système conforme à la présente invention ne perturbe aucunement le fonctionnement lorsque l'élément mobile 30 de capteur est parfaitement coaxial à l'arbre 10.

Le type de capteur utilisé peut faire l'objet de nombreuses variantes. Il peut s'agir par exemple d'un capteur à effet Hall (auquel cas l'élément mobible 30 comprend au moins un aimant ou de préférence une série d'aimants répartis sur sa périphérie), d'un capteur optique (auquel cas l'élément mobile 30 comprend une alternance de bandes transparentes et opaques réparties sur sa périphérie et coopérant avec un transducteur optique fixe, par exemple une fourchette encadrant l'élément mobile 30) ou d'un capteur capacitif, etc ...

Selon encore une autre variante, les ergots 14, 36 et/ou flasques 240, 242, 260, 262 peuvent être équipés de moyens à rattrapage de jeu, constitués par exemple de pattes souples et élastiques.

Selon une autre variante de réalisation, on peut prévoir un seul doigt 14 ou 36 et une seule fourchette 24 ou 26 pour assurer l'entraînement de la roue codeuse 30 à partir de l'arbre 10 (voire plus de deux doigts 14 ou 36 et plus de deux fourchettes 24 ou 36 équi-répartis autour de leurs axes respectifs 12, 32 et d'orientation radiale par rapport à ceux-ci).

## Revendications

1. Système à capteur d'angle, notamment pour colonne de direction de véhicule automobile, comprenant un élément d'entraînement (10), un élément mobile (30) de capteur d'angle, et des moyens (20) assurant une liaison d'entraînement à rotation entre l'élément d'entraînement (10) et l'élément mobile (30) de capteur d'angle, caractérisé par le fait que les moyens de liaison comprennent une pièce intermédiaire (20) intercalée entre l'élément d'entraînement (10) et l'élément mobile (30) de capteur, laquelle pièce intermédiaire (20) comporte des moyens (24, 26) aptes à assurer une liaison à rotation entre la pièce intermédiaire (20) et chacun de l'élément d'entraînement (10) et de l'élément mobile (30), tout en autorisant un débattement radial entre ladite pièce intermédiaire (20) et chacun de l'élément d'entraînement (10) et de l'élément mobile (30).

2. Système selon la revendication 1, caractérisé par le fait que l'élément d'entraînement est formé d'un élément (10) lié à l'arbre de direction, par exemple un élément de contacteur électrique tournant (Ct) ou l'arbre de direction lui-même.

3. Système selon l'une des revendications 1 ou 2, caractérisé par le fait que l'élément mobile (30) du capteur d'angle est formé d'une roue codeuse annulaire.

4. Système selon l'une des revendications 1 à 3, caractérisé par le fait que la pièce intermédiaire (20) est en forme générale d'anneau ou de bague.

5. Système selon l'une des revendications 1 à 4, caractérisé par le fait qu'il est prévu au moins un ergot radial (14) et une fourchette complémentaire (240, 242) assurant la liaison à rotation entre l'élément d'entraînement (10) et la pièce intermédiaire (20).

6. Système selon l'une des revendications 1 à 5, caractérisé par le fait qu'il est prévu au moins deux ergots radiaux (14) diamétralement opposés et deux fourchettes complémentaires (240, 242) assurant la liaison à rotation entre l'élément d'entraînement (10) et la pièce intermédiaire (20).

7. Système selon l'une des revendications 5 ou 6, caractérisé par le fait que chaque ergot (14) est lié à l'élément d'entraînement (10) tandis que chaque fourchette est liée à la pièce intermédiaire (20).

8. Système selon l'une des revendications 1 à 7, caractérisé par le fait qu'il est prévu au moins un ergot radial (36) et une fourchette complémentaire (260, 262) assurant la liaison à rotation entre la pièce intermédiaire (20) et l'élément mobile (30).

9. Système selon l'une des revendications 1 à 8, caractérisé par le fait qu'il est prévu au moins deux ergots radiaux (36) diamétralement opposés et deux fourchettes complémentaires (260, 262) assurant la liaison à rotation entre la pièce intermédiaire (20) et l'élément mobile (30).

10. Système selon l'une des revendications 8 à 9, caractérisé par le fait que chaque ergot (36) est lié à la pièce mobile (30), tandis que chaque fourchette (260, 262) est liée à la pièce intermédiaire (20).

11. Système selon l'une des revendications 5 ou 6, caractérisé par le fait que chaque ergot (14) possède deux flancs (15, 16) symétriques par rapport à un plan axial passant par l'axe (12) de l'élément d'entraînement et parallèles à celui-ci.

12. Système selon l'une des revendications 5 à 7, caractérisé par le fait que chaque fourchette (24) comprend deux flasques (240, 242) symétriques par rapport à un plan axial passant par l'axe central (22) de la pièce intermédiaire (20) et parallèles à celui-ci.

13. Système selon l'une des revendications 8 ou 9, caractérisé par le fait que chaque ergot (36) possède deux flancs (37, 38) symétriques par rapport à un plan axial passant par l'axe (32) de l'élément mobile (30) et parallèles à celui-ci.

14. Système selon l'une des revendications 8 à 10 et 13, caractérisé par le fait que chaque fourchette (26) comprend deux flasques (260, 262) symétriques par rapport à un plan axial passant par l'axe central (22) de la pièce intermédiaire (20) et parallèles à celui-ci.

15. Système selon l'une des revendications 5 à 14, caractérisé par le fait que l'ouverture de chaque fourchette est complémentaire de la largeur d'un ergot associé.

16. Système selon l'une des revendications 5 à 15, caractérisé par le fait que les ergots (14, 36) et/ou flasques (240, 242, 260, 262) des fourchettes associés sont équipés de moyens à rattrapage de jeu, constitués par exemple de pattes souples et élastiques.

17. Système selon l'une des revendications 1 à 16, caractérisé par le fait que les moyens (24, 26) prévus sur la pièce intermédiaire (20) pour assurer la liaison à rotation entre cette pièce intermédiaire (20) et respectivement l'élément d'entraînement (10) et l'élément mobile (30) sont décalés angulairement d'environ 90° par rapport à l'axe (22) de la pièce intermédiaire (20).

18. Système selon l'une des revendications 1 à 17, caractérisé par le fait que le débattement radial autorisé entre la pièce intermédiaire (20) et respectivement chacun de l'élément d'entraînement (10) et l'élément mobile (30) est au moins égal au décalage (x) maximal entre les axes (12 et 32) de l'élément d'entraînement (10) et de l'élément mobile (30).

19. Système selon l'une des revendications 1 à 18, caractérisé par le fait que les moyens de liaison prévus respectivement sur l'élément d'entraînement (10), la pièce intermédiaire (20) et l'élément mobile (30) sont orientés radialement par rapport à leurs axes respectifs (12, 22, 32).
